# EUROPÄISCHE PATENTSCHRIFT

(11) **EP 1 291 541 B1**
(45) Veröffentlichungstag und Bekanntmachung des Hinweises auf die Patenterteilung: **22.03.2006**
(21) Anmeldenummer: 02025289.6
(22) Anmeldetag: 03.11.1998
(51) Int. Cl.: F16D 65/16, F16D 65/21, F16D 65/14

(54) **Elektrisch betätigbare Bremse für ein Kraftfahrzeug**
Electrically actuated brake for an automobile
Frein à actionnement électrique pour véhicule automobile

(30) Priorität: 14.11.1997 DE 19750420
(43) Veröffentlichungstag der Anmeldung: 12.03.2003
(62) Teilanmeldung aus: 98120864.8
(73) Patentinhaber: Bayerische Motoren Werke Aktiengesellschaft, 80809 München (DE)
(72) Erfinder: Pitzer, Franz, 85716 Unterschleissheim (DE)

(56) Entgegenhaltungen:
- EP-A- 0 788 957
- DE-A- 19 620 344
- US-A- 3 348 638
- US-A- 4 542 809

## Beschreibung

Die Erfindung bezieht sich auf eine elektrisch betätigte Bremse für ein Kraftfahrzeug, mit einem rotatorischen Antrieb zur Erzeugung der Bremskraft, sowie mit einer Feststelleinrichtung mit einem Klinkenrad, das drehfest mit dem Antrieb verbunden ist und mit einer in das Klinkenrad einrückbaren Sperrklinke. Eine derartige elektrisch betätigte Bremse ist in Form einer Feststellbremse aus der US 3,348,638 bekannt. Dabei sei ausdrücklich darauf hingewiesen, dass die vorliegende Erfindung nicht auf eine elektromechanische Feststellbremse beschränkt ist, sondern generell bei elektrisch betätigten Bremsen, wie bspw. in der DE 195 43 098 C2 beschrieben, eingesetzt werden kann.

Eine an sich bekannte Feststelleinrichtung mit einem Klinkenrad und einer Sperrklinke ist grundsätzlich vorteilhaft, jedoch muss gewährleistet sein, dass diese Feststelleinrichtung in sämtlichen möglichen Stellungen des Klinkenrades zuverlässig aktiviert werden kann, d.h. dass die oder eine Sperrklinke bei Bedarf sicher im Klinkenrad einrastet. Hierfür eine Maßnahme aufzuzeigen, ist Aufgabe der vorliegenden Erfindung.

Zur Lösung dieser Aufgabe wird vorgeschlagen, dass zwei verschwenkbare Sperrklinken, die gemeinsam verlagerbar sind, vorgesehen sind. Bevorzugt sind die zwei symmetrisch zum Klinkenrad angeordneten Sperrklinken dabei über einen motorischen Antrieb verlagerbar, wobei dieser Begriff "motorisch" allgemein zu verstehen ist.

Mit erfindungsgemäß zwei vorgesehenen Sperrklinken ist sichergestellt, dass unabhängig von der jeweils aktuellen Position des Klinkenrades jeweils zumindest eine der beiden gemeinsam verlagerbaren Sperrklinken einrasten kann, wobei die vorgeschlagene Verschwenkbewegung der Sperrklinken im Hinblick auf deren gemeinsame Verlagerung besonders vorteilhaft ist. Die vorgeschlagene mechanische Sperreinrichtung, die nach vorangegangenem Spannen der Betriebsbremse den elektrischen Antrieb verriegelt und damit die Bremswirkung im Sinn einer Feststellbremse für das stehende Fahrzeug aufrechterhält, kann dann nicht nur einfach aufgebaut sein und eine sichere Funktion gewährleisten und somit das Nachlassen der Feststellwirkung über der Zeit verhindern, sondern sie kann insbesondere sicher bei allen Positionen des Klinkenrades aktiviert werden.

Weitere Ausgestaltungen und Vorteile der Erfindung gehen aus den übrigen Unteransprüchen hervor.

Ein mögliches Ausführungsbeispiel der Erfindung ist in der Zeichnung dargestellt und wird nachfolgend näher erläutert. Dabei zeigt:
- Figur 1: einen Bremssattel mit einer erfindungsgemäßen Feststelleinrichtung in perspektivischer Ansicht,
- Figur 2: eine Draufsicht auf die erfindungsgemäße Feststelleinrichtung, bei gelöster Feststellbremse und
- Figuren 3 und 4: der Figur 2 entsprechende Darstellungen der aktivierten Feststelleinrichtung.

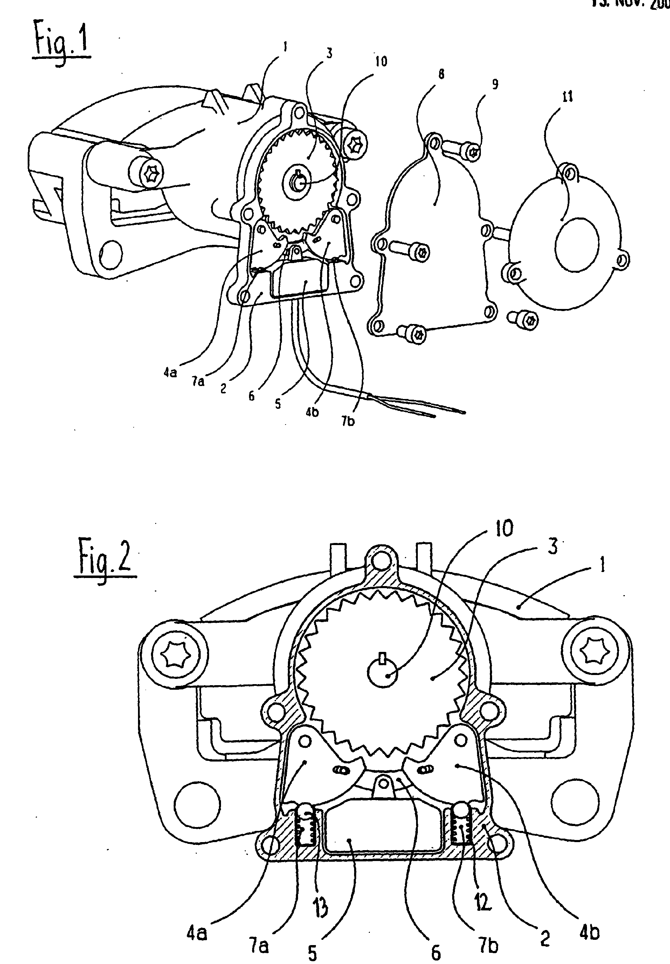

Figur 1 zeigt einen "elektromechanischen Bremssattel" 1, der als Faustsattel für eine Scheibenbremse ausgeführt ist. Im Inneren des Bremssattels 1 ist ein Elektromotor angeordnet, der bei Strombeaufschlagung eine Rotationsbewegung ausführt, die über ein Getriebe in eine geradlinig verlaufende Zustellbewegung der Bremsbacken umgewandelt wird. Aufgrund des Wirkungsgrades einer derartigen Anordnung ist davon auszugehen, daß bei stromlosem Elektromotor keine (sichere) Selbsthemmung vorliegt, so daß sich die Bremse ganz oder teilweise selbsttätig lösen kann. Daher an dem den Bremsbacken abgewandten Endabschnitt des Bremssattels 1 eine Feststelleinrichtung angeordnet. Hierzu weist der Bremssattel 1 eine Gehäuseöffnung auf, an die das Gehäuse 2 der Feststelleinrichtung angeflanscht ist. Diese Anordnung zeichnet sich durch gute Zugänglichkeit aus. Das Gehäuse 2 ist durch einen Deckel 8 über Schrauben 9 verschließbar. Alternativ kann bei einer Ausführung des Bremssattels 1 ohne Feststelleinrichtung die Gehäuseöffnung mit einem Blinddeckel 11 verschlossen werden.

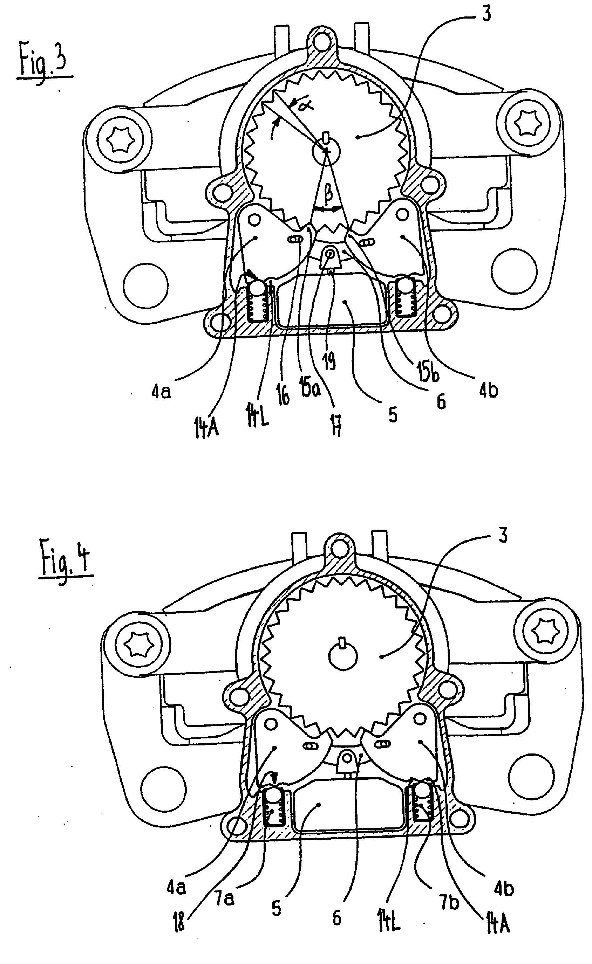

Zur Anbindung der Feststelleinrichtung ist die Antriebswelle 10 des Elektromotors so weit aus dem Bremssattel 1 herausgeführt, daß sie ein Klinkenrad 3 verdrehfest aufnehmen kann. Im unteren Teil des Gehäuses 2 sind zwei schwenkbar gelagerte Sperrklinken 4a und 4b angeordnet, die über einen Elektromagneten 5 sowie eine Wippe 6 verstellbar sind. Federelemente 7a und 7b, die in den Figuren 2 bis 4 näher dargestellt sind, bewirken eine Lagefixierung der Sperrklinken 4a und 4b.

Figur 2 zeigt den elektromechanischen Bremssattel bei gelöster Feststelleinrichtung. Beide Sperrklinken 4a und 4b sind vom Klinkenrad 3 abgehoben, wobei diese ausgerückte Position durch Einrasten der Federelemente 7a und 7b definiert gehalten wird. Die Federelemente 7a und 7b weisen jeweils eine Schraubenfeder 12 auf, die in eine Bohrung des Gehäuses 2 eingesetzt ist. Über die Schraubenfedern 12 werden Kugeln 13 in entsprechend geformte Ausnehmungen 14A und 14L der Sperrklinken 4a und 4b gedrückt.

Bei Bestromung des Elektromagneten 5 bewegt der Hubzapfen 19 die Wippe 6 auf das Klinkenrad 3 zu und verschwenkt hierbei die beiden Sperrklinken 4a und 4b (Figuren 3 und 4). Die Längsschlitze 16 sowie die Kipplagerung 17 der Wippe 6 ermöglichen einen unterschiedlichen Verschwenkwinkel der beiden Sperrklinken 4a und 4b: So greift gemäß Figur 3 der Rastzahn 15a der Sperrklinke 4a vollständig in die Sperrverzahnung des Klinkenrades 3 ein, während es im Fall der Sperrklinke 4b zu einer Kopf-Kopf-Stellung von Rastzahn 15b und Sperrverzahnung des Klinkenrades 3 kommt. Bei der in Figur 3 dargestellten Konstellation rastet die Kugel 13 des Federelementes 7a in die Ausnehmung 14A der Sperrklinke 4a ein und arretiert damit die Sperrklinke 4a in ihrer Feststellposition. Zum Betätigen der Feststelleinrichtung ist nur eine einmalige, kurzzeitige Betätigung des Elektromagneten 5 notwendig. Der Fahrer des Kraftfahrzeuges kann die Feststelleinrichtung aktiv durch ein entsprechendes tastenartiges Bedienelement ansteuern. Zusätzlich kann die Feststellung bei Vorliegen bestimmter, vorgegebener Bedingungen des Kraftfahrzeuges selbsttätig erfolgen (Ampelstop-Funktion, etc.).

Die Sperrklinken 4a und 4b sind so angeordnet, daß ihre Rastzähne 15a bzw. 15b einen Winkel β einschließen, der das (n + 0,5)fache des Winkels α der Zahnteilung der Sperrverzahnung des Klinkenrades 2 beträgt. Im dargestellten Ausführungsbeispiel hat β den Wert 2,5 α. Durch diese definierte Anordnung der Sperrklinken 4a und 4b wird erreicht, daß - unabhängig von der Stellung des Klinkenrades 3 - der Rastzahn 15a bzw. 15b wenigstens einer Sperrklinke 4a oder 4b bei Betätigung des Elektromagnetes 5 so weit in die Sperrverzahnung des Klinkenrades 3 einrückt, daß das zugehörige Federelement 7a bzw. 7b sicher in die Ausnehmung 14A einrastet, wie in Figur 3 dargestellt.

Figur 4 stellt den Grenzfall einer Klinkenradstellung dar, bei der keine der beiden Sperrklinken 4a und 4b vollständig in die Sperrverzahnung des Klinkenrades 3 einrastet. Für diesen Fall greifen die Rastzähne 15a und 15b beider Sperrklinken 4a und 4b jedoch so weit in die Sperrverzahnung des Klinkenrades 3 ein, daß die Kugeln 16 beider Federelemente 7a und 7b jeweils über den "Totpunkt" 18 zwischen den Ausnehmungen 14A und 14L der Sperrklinken 4a und 4b in Richtung der Ausnehmungen 14A hinausbewegt sind und durch diese Übertotpunktlage eine sichere Feststellung der Bremse erreicht wird.

Zum Lösen der Feststellbremse wird durch umgepolte Bestromung des Elektromagneten 5 dessen Hubzapfen 19 eingezogen, so daß über die Wippe 6 die Sperrklinken 4a und 4b aus der Sperrverzahnung herausgeschwenkt werden. Die Feststellung der Bremse kann bei entsprechender Auslegung der Feststelleinrichtung aber auch durch Betätigung des Elektromotors gelöst werden, indem das von diesem in Drehung versetzte Klinkenrad 3 die Sperrklinken 4a und 4b quasi aus der Verrastung drückt. Dabei schnappen die Sperrklinken 4a und 4b nach Überschreiten des Totpunktes 18 zwischen den Ausnehmungen 14A und 14L vollständig in ihre Löseposition 14L. Diese Möglichkeit des Lösens der Feststellbremse ist unter anderem abhängig von der Geometrie der Verzahnung zwischen den Rastzähnen 15a bzw. 15b und der Sperrverzahnung des Klinkenrades 3, insbesondere von der Wahl des Eingriffswinkels zwischen den Verzahnungspartnem, von der Federkraft der Federelemente 7a bzw. 7b, von der Art der Verrastung zwischen Federelement 7a, 7b in der Ausnehmung 14A (bspw. wie dargestellt; System Kugel-Kugelpfanne), von den Reibverhältnissen in der gesamten Anordnung, etc.

Das beschriebene Lösen der Feststellbremse über die Betriebsbremse, d.h. über den Elektromotor und ein Verdrehen des Klinkenrades 3 kann dann angewandt werden, wenn bei festgestellter Bremse der Elektromagnet 5 ausfällt. Durch Betätigung der Betriebsbremse (Anziehen oder Lösen) wird somit der Feststellmechanismus gelöst und die Weiterfahrt des Fahrzeuges ermöglicht. Andererseits ist durch diese Möglichkeit des Lösens ein "integriertes Sicherheitskonzept" gegeben, so daß bei einer ungewollten Betätigung der Feststelleinrichtung während der Fahrt des Kraftfahrzeuges die Betriebsbremse gegenüber der Feststellbremse dominiert. Durch den beschriebenen Übertotpunktmechanismus zur Lagefixierung der Sperrklinken 4a und 4b werden die die Sperrklinken 4a und 4b vollständig vom Klinkenrad 3 abgehoben, indem die Kugeln 13 in die Ausnehmungen 14L einschnappen, so daß keinerlei störende Rattergeräusche bei einem anschließenden Gebrauch der Betriebsbremse entstehen.

Die erfindungsgemäße Feststelleinrichtung besteht aus wenigen, einfach aufgebauten mechanischen Teilen und einem Elektromagneten. Durch das integrierte Sicherheitskonzept kann auf eine zusätzliche Sensorik und Verstelleinrichtung zur Erkennung bzw. Vermeidung unzulässiger Betriebszustände verzichtet werden.

## Patentansprüche

1. Elektrisch betätigte Bremse für ein Kraftfahrzeug, mit einem rotatorischen Antrieb zur Erzeugung der Bremskraft, sowie mit einer Feststelleinrichtung mit einem Klinkenrad (3), das drehfest mit dem Antrieb (10) verbunden ist,
**gekennzeichnet durch** zwei verschwenkbare Sperrklinken (4a, 4b), die gemeinsam verlagerbar und in das Klinkenrad (3) einrückbar sind.

2. Bremse nach Anspruch 1,
**dadurch gekennzeichnet, dass** die zwei Sperrklinken (4a,4b) symmetrisch zum Klinkenrad (3) angeordnet und über einen motorischen Antrieb verlagerbar sind.

3. Bremse nach Anspruch 1 und/oder 2,
**dadurch gekennzeichnet, daß** die Rastzähne (15a, 15b) der Sperrklinken (4a, 4b) in Bezug auf den Mittelpunkt des Klinkenrades (3) einen Winkel (β) einschließen, der ein (n + 0,5)faches des Winkels (α) der Zahnteilung des Klinkenrades (3) beträgt, mit n = 1, 2, 3 ....

4. Bremse nach einem der vorgenannten Ansprüche,
**gekennzeichnet durch** eine Einrichtung zur Lagefixierung der Sperrklinke (4a, 4b), die die beiden Positionen "Sperrklinke (4a, 4b) vollständig in das Klinkenrad (3) eingerückt" und "Sperrklinke (4a, 4b) vollständig vom Klinkenrad (3) abgehoben" erzeugt.

5. Bremse nach Anspruch 4,
**dadurch gekennzeichnet, daß** die Einrichtung zur Lagefixierung der Sperrklinke (4a, 4b) aus zwei Ausnehmungen (14A, 14L) in der Sperrklinke (4a, 4b) und einem in die Ausnehmungen (14A, 14L) eingreifenden, federbelasteten Element (13) besteht.

6. Bremse nach einem der vorangegangene Ansprüche,
**dadurch gekennzeichnet, daß** die Sperrklinke (4a, 4b) über einen Elektromagneten (5) verlagerbar ist.

## Claims

1. An electrically actuated brake for a motor vehicle, comprising a rotatory drive for producing the braking force, as well as a locking device with a ratchet wheel (3), which is non-rotatably connected to the drive (10), **characterised by** two pivotable pawls (4a, 4b), which can be displaced together and engaged in the ratchet wheel (3).

2. A brake according to claim 1, **characterised in that** the two pawls (4a, 4b) are arranged symmetrically with respect to the ratchet wheel (3) and can be displaced via a motor drive.

3. A brake according to claim 1 and/or 2, **characterised in that** the latching teeth (15a, 15b) of the pawls (4a, 4b), with respect to the centre point of the ratchet wheel (3), enclose an angle (β), which is (n + 0.5) times the angle (α) of the tooth pitch of the ratchet wheel (3), with n = 1, 2, 3 and so on.

4. A brake according to any one of the preceding claims, **characterised by** a device for fixing the position of the pawl (4a, 4b), which produces the two positions "pawl (4a, 4b) completely engaged in the ratchet wheel (3)" and "pawl (4a, 4b) completely lifted from the ratchet wheel (3)".

5. A brake according to claim 4, **characterised in that** the device for fixing the position of the pawl (4a, 4b) consists of two recesses (14A, 14L) in the pawl (4a, 4b) and a spring-loaded element (13) engaging in the recesses (14A, 14L).

6. A brake according to any one of the preceding claims, **characterised in that** the pawl (4a, 4b) can be displaced via an electromagnet (5).

## Revendications

1. Frein à actionnement électrique pour véhicule doté d'un entraînement rotatif générant la force de freinage ainsi que d'un dispositif d'immobilisation équipé d'une roue à cliquet (3) solidaire en rotation avec l'entraînement (10),
**caractérisé par**
deux cliquets d'arrêt rotatifs (4a, 4b) mobiles simultanément et pouvant s'engager dans la roue à cliquet (3).

2. Frein selon la revendication 1,
**caractérisé en ce que**
les deux cliquets d'arrêt (4a, 4b) disposés symétriquement par rapport à la roue à cliquet (3) peuvent être déplacés par un entraînement moteur.

3. Frein selon la revendication 1 et/ou 2,
**caractérisé en ce que**
les dents (15a, 15b) des cliquets d'arrêt (4a, 4b) incluent un angle (β) qui est de (n+0,5) fois l'angle (α) de la division des dents de la roue à cliquet (3), sachant que n= 1, 2, 3....

4. Frein selon l'une quelconque des revendications précédentes,
**caractérisé par**
un dispositif de fixation de la position du cliquet d'arrêt (4a, 4b) qui génère les deux positions « cliquet d'arrêt (4a, 4b) complètement engagé dans la roue à cliquet (3) » et « cliquet d'arrêt (4a, 4b) complètement soulevé de la roue à cliquet (3) ».

5. Frein selon la revendication 4,
**caractérisé en ce que**
le dispositif de fixation de la position du cliquet d'arrêt (4a, 4b) se compose de deux évidements (14A, 14L) dans le cliquet d'arrêt (4a, 4b) et d'un élément (13) chargé par ressort et s'engageant dans les évidements (14A, 14L).

6. Frein selon l'une quelconque des revendications précédentes,
**caractérisé en ce que**
le cliquet d'arrêt (4a, 4b) peut être déplacé par un électroaimant (5).
